Europäisches Patentamt

European Patent Office

Office européen des brevets

(11) Numéro de publication: **0 033 048**
**B1**

(12) **FASCICULE DE BREVET EUROPEEN**

(45) Date de publication du fascicule du brevet: **05.12.84**

(51) Int. Cl.³: **G 01 J 3/26, G 02 F 1/21**

(21) Numéro de dépôt: **80401864.6**

(22) Date de dépôt: **24.12.80**

(54) Interféromètre à cavité optique accordable comprenant une fibre optique monomode et application au filtrage et à la spectrographie.

(30) Priorité: **29.01.80 FR 8001892**

(43) Date de publication de la demande:
**05.08.81 Bulletin 81/31**

(45) Mention de la délivrance du brevet:
**05.12.84 Bulletin 84/49**

(84) Etats contractants désignés:
**DE GB NL**

(56) Documents cités:
**US-A-3 308 394**

**APPLIED PHYSICS LETTERS, vol. 32, no. 10, 15 mai 1978, New York, US, K. HILL et al.: "Photosensitivity in optical fiber waveguides: application to reflection filter fabrication", pages 647-649**
**IBM TECHNICAL DISCLOSURE BULLETIN, vol. 6, no. 7, décembre 1963, New York, US, A. NETHERCOT: "Light modulator", pages 55-56**

(73) Titulaire: **THOMSON-CSF**
**173, Boulevard Haussmann**
**F-75379 Paris Cedex 08 (FR)**

(72) Inventeur: **Papuchon, Michel**
**THOMSON-CSF SCPI 173, bld Haussmann**
**F-75360 Paris Cedex 08 (FR)**
Inventeur: **Puech, Claude**
**THOMSON-CSF SCPI 173, bld Haussmann**
**F-75360 Paris Cedex 08 (FR)**
Inventeur: **Arditty, Hervé**
**THOMSON-CSF SCPI 173, bld Haussmann**
**F-75360 Paris Cedex 08 (FR)**

(74) Mandataire: **Wang, Pierre et al**
**THOMSON-CSF SCPI 173, Bld Haussmann**
**F-75379 Paris Cedex 08 (FR)**

(56) Documents cités:
**NOUVELLE REVUE D'OPTIQUE, vol. 6, no. 5, séptembre-octobre 1975, Paris, FR, E. NEUMANN: "Inhomogeneities in monomode optical waveguides", pages 263-271**
**APPLIED OPTICS, vol. 18, no. 9, 1er mai 1979, New York, US, G. HOCKER: "Fiber optic sensing of pressure and temperature", pages 1445-1448**

Courier Press, Leamington Spa, England.

## Description

La présente invention concerne un interféromètre du type Fabry-Pérot utilisable notamment en spectrographie ou pour le filtrage optique.

Un interféromètre du type Fabry-Pérot classique comprend deux lames semi-transparentes à fort coefficient de réflexion, parallèles, entre lesquelles se forme une lame d'air d'épaisseur rigoureusement contrôlée. Un rayon lumineux incident fournit une série de rayons émergents qui interfèrent à l'infini ou dans le plan focal d'un objectif. Les franges d'interférence sont des anneaux brillants sur fond sombre. En particulier, le centre est brillant pour une série de valeurs du rapport entre l'épaisseur de la lame et la longueur d'onde. En faisant varier l'épaisseur, par exemple par l'intermédiaire de ressorts que lesquels on agit par des vis, on peut modifier à volonté les conditions d'interférence.

Ce type d'interféromètre nécessite des réglages très fins, notamment quant au parallélisme des lames semitransparentes et à l'ajustage de l'épaisseur. Des considérations technologiques dues aux moyens de réglage mécaniques qui sont utilisés habituellement de la lame d'air, donc la résolution en longueur d'onde. Par ailleurs, les variations de l'épaisseur ne peuvent pas être très rapides.

Un document de l'art connu, à savoir le brevet américain US—A—3 308 394 est relatif à une cavité optique accordable ayant les caractéristiques suivantes:

— une fibre optique monomode constituant la cavité;
— deux éléments réflecteurs délimitant cette cavité optique;
— et des moyens permettant de faire varier le chemin optique entre ces deux éléments.

L'invention vise un interféromètre de type Fabry-Pérot de mise en oeuvre plus simple et ne nécessitant pas de réglages. Selon l'invention, ce but est atteint avec un interféromètre tel que défini dans la revendication 1. L'invention vise également l'utilisation d'un tel interféromètre dans un dispositif optique monochromateur, un dispositif optique de spectrographie et un dispositif de mesure de pression tels que revendiqués dans les revendications respectives 12, 13 et 14.

La technologie actuelle permettant de réaliser des fibres optiques monomodes ayant des pertes linéiques très faibles, on peut disposer si nécessaire d'une grande longueur (pouvant aller jusqu'à plusieurs kilomètres) sans que les pertes introduites ne réduisent la finesse de raie de l'interféromètre. Différents moyens sont prévus pour remplacer les lames semitransparentes d'un interféromètre classique dépôt de couches réflectrices aux extrémités de la fibre, création de discontinuités au voisinage des extrémités. Il n'y a pas de problème d'alignement. Pour obtenir le balayage, on modifie le chemin optique parcouru par la lumière dans la fibre en utilisant un paramètre physique tel que: contrainte mécanique, variation d'indice par effet élasto-optique, magnéto-optique, électro-optique ..., dilatation thermique ... L'accord de la cavité peut être très rapide. La fibre est enroulée autour d'un mandrin cylindrique, si bien que l'encombrement peut être très réduit.

Les caractéristiques et avantages de l'invention apparaîtront clairement au moyen de la description ci-après fournissant de façon non limitative des exemples de modes de réalisation de l'invention en référence aux figures annexées parmi lesquelles:

— la figure 1 est un schéma général d'interféromètre selon l'invention;
— les figures 2 et 3 sont des diagrammes explicatifs du fonctionnement de l'invention;
— la figure 4 représente un mode de réalisation préféré de l'invention;
— la figure 5 représente un autre mode de réalisation de l'invention.

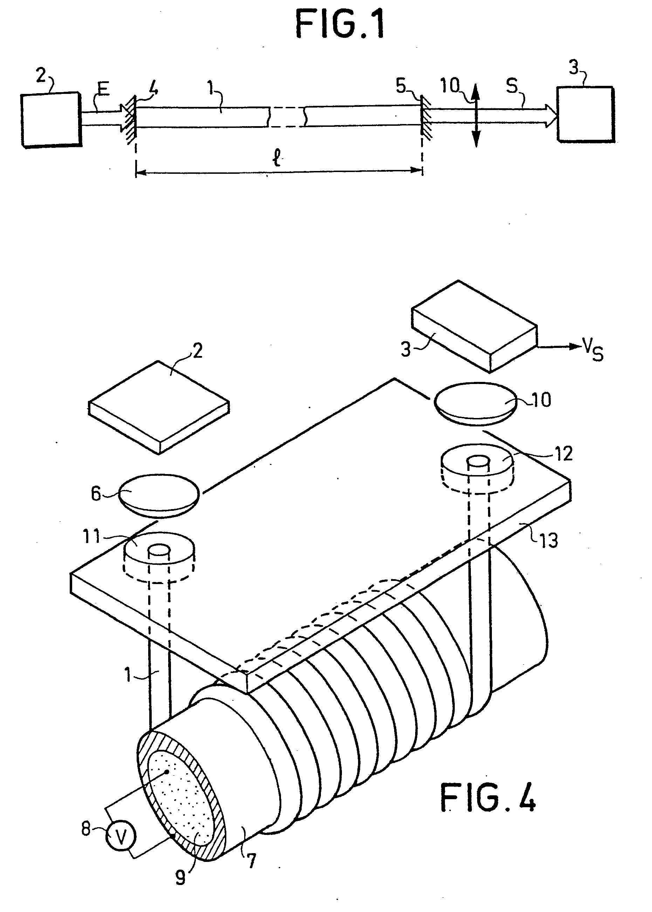

La figure 1 est un schéma général d'interféromètre selon l'invention. Un rayonnement optique E issu d'une source 2 est introduit dans une fibre optique monomode 1. Des éléments réflecteurs 4 et 5 sont créés, soit aux extrémités de la fibre, comme ils ont été schématiquement représentés, soit au voisinage des extrémités. Le rayonnement optique se propageant dans la fibre subit donc des réflexions multiples entre les deux réflecteurs. La superposition des ondes transmises par le réflecteur 5 forme un rayonnement S éventuellement focalisé par des moyens de focalisation 10 et recueilli par un photodétecteur 3 centré sur les axes des moyens 10 et de la fibre 1, ces axes étant confondus. Les extrémités de la fibre 1 étant polies pour former des surfaces planes perpendiculaires à l'axe de la fibre et celle-ci étant monomode, la fraction du rayonnement réfléchi par chaque réflecteur respecte nécessairement les conditions de guidage dans la fibre et peut donc se propager vers l'autre extrémité. Chaque réflecteur peut être caractérisé par son coefficient de réflexion R et son coefficient d'absorption A, si bien que le coefficient de transmission T est égal à 1—R—A. De façon analogue à un interféromètre Fabry-Pérot classique, le rayonnement S résulte de la superposition d'ondes qui interfèrent entre elles; le déphasage entre deux ondes successives de même sens, c'est à dire après un aller et retour dans la fibre entre les deux réflecteurs étant égal à $2\beta l$ où $\beta$ est la constante de propagation et $l$ la longueur de la fibre entre les deux réflecteurs. Celle-ci dépend de la longueur d'onde, si bien que, k étant la constante de propagation dans le vide, pour chaque longueur d'onde $\lambda$, on peut définir l'indice effectif de la fibre:

$$n = \frac{\beta}{k},$$

qui est voisin de son indice de réfraction et le chemin optique L=nl. Le photodétecteur 3 détecte des pics d'intensité lorsque l'ordre d'interférence au centre:

$$p = \frac{2L}{\lambda}$$

est un nombre entier, ce qui signifie que les interférences sont constructives, c'est à dire que le déphasage 2 $\beta l$ est un multiple de $2\pi$.

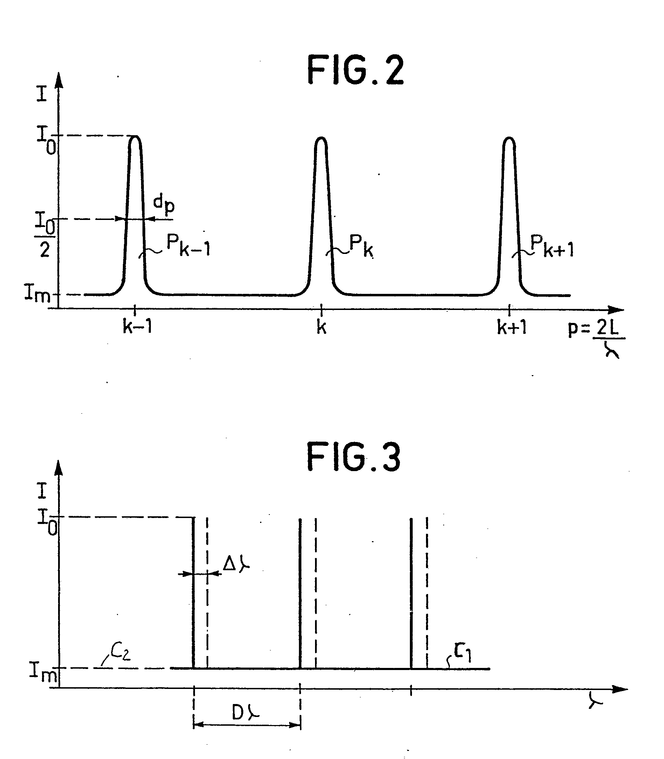

Les principaux résultats donnés ci-après sont communs à tous les interféromètres de type Fabry-Pérot. La figure 2 représente les variations d'intensité lumineuse I en fonction de l'ordre d'interférence p. On voit apparaître sur la figure trois pics d'intensité $P_{k-1}$, $P_k$, $P_{k+1}$ au centre desquels l'intensité est maximale Io, correspondant aux valeurs entières successives k−1, k, k+1, de p. La largeur de chaque pic, dp, correspondant à une diminution d'intensité

$$\frac{Io}{2}$$

dépend du coefficient de réflexion R:

$$dp = \frac{1-R}{\pi\sqrt{R}}$$

Le constraste du système d'interférence:

$$\frac{Io}{Im}$$

dépend également de

$$\text{de } R: \frac{Io}{I_m} = \frac{4R}{(1+R)^2}.$$

Ainsi, pour R=50%, on a dp≠0,25 et

$$\frac{Io}{I_m}$$

≠9; pour R=90%, dp≠1/30 et

$$\frac{Io}{I_m}$$

≠400; pour R=98%, dp≠1/150 et $I_m$ est pratiquement négligeable devant $I_o$.

A partir de la figure 2, on peut obtenir les courbes de variations d'intensité limineuse I en fonction de la longueur d'onde $\lambda$ pour différentes valeurs de chemin optique L. Sur la figure 3, sont représentées: en traits pleins, la courbe $C_1$ correspondant à une valeur donnée de L et en pointillés, la courbe $C_2$ correspondant à une valeur L+$\Delta$L. L'intervalle spectral libre D$\lambda$ égal à l'écart en longueur d'onde entre deux pics successifs est égal à

$$\frac{\lambda}{p}$$

L'ordre d'interférence p croît avec le chemin optique L, tandis que l'intervalle spectral décroît. L'invention permet d'une part d'utiliser des valeurs de L très grandes, d'autre part d'obtenir des variations relatives

$$\frac{\Delta L}{L}$$

importantes, par des moyens qui seront décrits dans la suite de la description. Ces variations relatives déterminent les variations relatives de longueur d'onde des pics:

$$\frac{\Delta\lambda}{\lambda} = \frac{\Delta L}{L}$$

pour chaque ordre.

A titre indicatif, avec une fibre optique d'indice n=1,5, autour d'une longueur d'onde moyenne=1 $\mu$m, pour l=10 cm, on a p=3.10⁵ et D=1,8.10⁻³ nm; pour l=100 m, p=3.10⁸ et D=1,8.10⁻⁶ nm. La largeur de pic dp, donc la résolution d diminuent également lorsque la longueur de fibre augmente. Pour un coefficient de réflexion R=95%, d=3.10⁻⁵ nm pour l=10 cm; d=3.10⁸ nm pour l=100 m.

Bien que la sélectivité de l'interféromètre paraisse d'autant meilleure que la fibre utilisée est plus longue, un autre facteur intervient pour limiter les valeurs possibles de longueur. Il s'agit des pertes d'absorption, proportionnelles à la longueur de la fibre. Une fibre optique est en effet caractérisée par son coefficient linéique d'absorption, qui varie avec la longueur d'onde du rayonnement propagée. Les techniques connues de fabrication des fibres permettent d'atteindre des valeurs très faibles de coefficient linéique pour une longueur d'onde donnée. Ce coefficient augmente lorsqu'on s'éloigne de ladite longueur d'onde. Typiquement, on peut admettre que l'on peut tolérer une perte d'absorption pour un aller et retour dans la fibre allant jusqu'à 0,5 dB. Au-delà de cette valeur, on constate une diminution importante du contraste. A titre d'exemple, une fibre ayant une perte égale à 2 dB/km pour une longueur d'onde de 850 nm peut avoir une perte de l'ordre de 30 à 50 dB/km pour une longueur d'onde de 500 nm et de l'ordre de 100 dB/km vers 450 nm. Si cette fibre est destinée à être utilisée dans toute une gamme typique 450—900 nm, pour une application de spectrographie par exemple, sa longueur ne devrait pas excéder 1 m, ce qui donne une perte de 0,5 dB pour un aller et retour et pour 450 nm. Si par contre, cette fibre est destinée à être utilisée dans une gamme étroite autour des minima d'absorption des fibres optiques (par exemple 850 nm, 1,3 um, 1,55 um pour une fibre en silice), pour une application de filtrage par exemple, on peut utiliser une valeur de longueur beaucoup plus grande. Les longueurs d'onde correspondant aux minima d'absorption dépendent de la composition de la fibre. Pour chaque application, un compromis est à déterminer entre la gamme de longueurs d'onde de fonctionnement, l'absorption tolérée qui définit le contraste minimum, la résolution et l'intervalle spectral.

Différents moyens peuvent être utilisés pour réfléchir les ondes lumineuses à chaque extrémité de la fibre. Un premier moyen est le dépôt de couches appropriées sur les extrémités préalablement polies de façon à former des faces planes perpendiculaires à l'axe de la fibre. Parmi les matériaux connus pour ce genre d'application, on peut citer des matériaux diélectriques: $MgF_2$, $TiO_2$, $SiO_2$. Le dépôt peut être fait d'une seule couche mais le plus souvent, il est formé d'une superposition de couches dont l'épaisseur et l'indice de réfraction sont calculés en fonction des longueurs d'ondes destinées à être propagées et de l'indice de réfraction de la fibre. On peut alors déterminer les coefficients de réflexion R et d'absorption A en fonction de la longueur d'onde. Pour obtenir un rendement énergétique maximal, il est préférable que l'absorption soit la plus faible possible. Dans le cas d'applications pour lesquelles le spectre de longueurs d'onde du rayonnement E est étroit, on peut déterminer les compositions de couches optimisant le rendement énergétique entre les rayonnements E et S. Par contre, lorsque le spectre des longueurs d'onde du rayonnement, est large, il peut être préférable d'utiliser des couches à large bande, c'est à dire pour lesquelles les coefficients de réflexion et d'absorption varient peu en fonction de la longueur d'onde. L'absorption des couches diélectriques s'ajoute à l'absorption dans la fibre et est à prendre en compte dans le compromis entre la largeur de bande et le coefficient d'absorption. Une correction peut être rendue nécessaire pour compenser les variations de rendement énergétique avec la longueur d'onde. Cette correction peut être effectuée par des moyens électroniques reliés à la sortie du photodétecteur 3. Une variante de ce type de réflecteur est constituée par des couches métalliques, très simples à déposer mais ayant une absorption plus forte que les couches diélectriques et non optimisable.

Un autre type de réflecteur peut être constitué par une discontinuité aux extrémités de la fibre. Une façon simple de l'obtenir consiste à accoler directement sur les deux extrémités polies respectivement la source lumineuse 2 constituée par exemple par un laser AsGa et le photodétecteur 3 constitué par exemple par une photodiode en silicium. La différence de nature entre le matériau constituant la fibre, du verre par exemple, et l'arséniure de gallium ou le silicium provoque une réflexion d'une partie de l'énergie lumineuse. Le coefficient de réflexion n'est pas optimisé mais peut être suffisant pour certaines applications et il n'y a pas d'absorption. La discontinuité peut aussi résider dans les dimensions de la fibre: un amincissement brutal de la fibre au voisinage de ses extrémités peut créer des réflexions importantes. On peut aussi créer des réseaux d'indice aux extrémités, ou même un réseau réparti sur toute la longueur de la fibre, créant un résonateur distribué. Un tel réseau peut être obtenu en enroulant la fibre sur un mandrin cannelé. Lorsque l'enroulement est effectué de telle façon que la fibre soit tendue, des cannelures périodiques s'étendant sur toute la longueur du mandrin cylindrique créent des contraintes variant périodiquement sur toute la longueur de la fibre. Le pas du réseau et sa longueur déterminent la longueur d'onde du pic de réflexion et sa largeur.

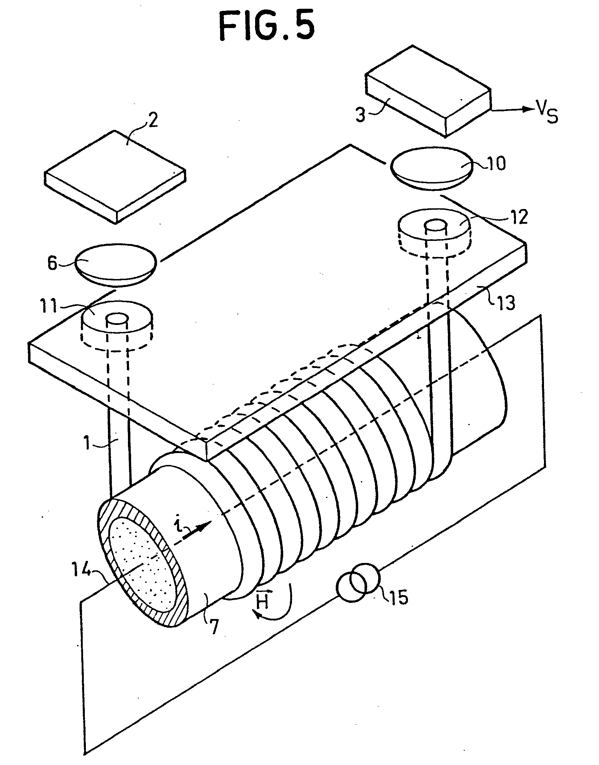

Parmi les phénomènes physiques capables de faire varier le chemin optique, on peut utiliser l'effet élasto-optique. Un mode de réalisation de l'invention illustrant cette utilisation est représenté sur la figure 4. La fibre 1 est enroulée autour d'un mandrin 7 en forme de cylindre constitué d'une céramique piézoélectrique. Des contraintes peuvent être créées dans la céramique au moyen d'une tension V fournie par une source de tension 8 reliée à deux électrodes déposées respectivement sur les faces interne et externe du cylindre. On peut faire en sorte que seul le diamètre extérieur du mandrin varie en remplissant l'intérieur 9 d'un matériau plastique non compressible. La dilatation de la céramique provoque des variations de longueur et d'indice de la fibre enroulée, ayant pour effet une variation du chemin optique L. Avec une tension V de quelques volts, on peut balayer plusieurs ordres de l'interféromètre, c'est à dire obtenir une variation de L de plusieurs fois la longueur d'onde. Le rayonnement E issu d'une source lumineuse 2 (par exemple un laser semiconducteur) est focalisé dans la fibre par des moyens classiques tels qu'une lentille 6, visant à introduire le maximum d'énergie dans la fibre. La photodiode 3 qui recueille le rayonnement S après focalisation par la lentille 10 délivre un signal électrique $V_s$ constitué d'impulsions correspondant aux pics de résonance. Pour réaliser un balayage, on utilise une tension V alternative. Il peut être nécessaire, pour obtenir une réponse linéaire, de réaliser une précontrainte de la fibre par un enroulement tendu de celle-ci, ou bien de superposer à la tension de commande alternative une tension continue. La fréquence de balayage peut être beaucoup plus élevée que celle d'un Fabry-Pérot classique. On peut avantageusement choisir une valeur de fréquence voisine de la fréquence de résonance de la céramique, qui peut être typiquement de l'ordre de 200 KHz. Toutefois, une limitation de la fréquence doit être prise en compte dans le cas de fibres de grande longueur, en raison du temps de propagation des rayonnements dans la fibre. Pour avoir un régime "stable" dans la fibre, il est préférable que la période du balayage soit nettement supérieure à la durée d'une dizaine d'allers et retours dans la fibre. Typiquement, la durée d'un aller et retour d'un rayonnement de longueur d'onde 1 um est de 0,5 $\mu s$ pour une fibre de 50 m. Il est donc préférable que la période de balayage soit nettement supérieure à 5 $\mu s$, ce qui correspond à la fréquence 200 KHz. Si la fibre utilisée est plus longue, la fréquence devra être encore plus faible. Par contre, pour une fibre de quelques dizaines de centimètres de longueur, une fréquence de 200 KHz ou même plus peut être envisagée sans inconvénient.

L'enroulement de la fibre permet de disposer d'une grande longueur avec un encombrement réduit. Le diamètre du mandrin doit cependant être suffisant pour éviter des pertes d'énergie lumineuse par radiation et augmenter les pertes apparentes de la fibre. Typiquement, il peut être de quelques centimètres. Avec certains types de fibres, il est possible de descendre jusqu'à un diamètre de 2 mm, sans pertes sensibles. Pour obtenir un dispositif compact et garantir le positionnement relatif des différents éléments, les extrémités de la fibre peuvent être placées dans des embouts solides 11 et 12. Ceux-ci sont encastrés dans une plaque rigide 13, en verre par exemple. Le positionnement des éléments optiques 2, 3, 6, 10 s'effectue par rapport à la plaque 13.

Le dispositif représenté sur la figure 4 admet de nombreuses variantes de réalisation, notamment quant à la façon dont sont créées les contraintes. En enroulant la fibre sur un mandrin cylindrique réalisé dans un matériau compressible, on peut créer des contraintes en faisant circuler un fluide sous pression à l'intérieur du mandrin. On peut aussi utiliser comme moyen de commande un champ magnétique, agissant sur un mandrin en matériau magnéto-strictif. Des contraintes peuvent également être obtenues par le biais d'une force de traction exercée sur le mandrin. On obtient également des variations de chemin optique en enroulant la fibre sur une bobine plate et en la plongeant dans une cuve à ultrasons, de façon que toutes les spires forment un même angle prédéterminé avec la direction de propagation des ondes ultra-sonores; la fréquence de ces ondes doit être choisie de façon que la période soit nettement supérieure au temps du parcours dans la fibre.

D'autres effets physiques que l'effet élasto-optique sont capables de provoquer des variations de chemin optique. Un effet particulièrement intéressant est l'effet magnéto-optique, dont l'utilisation est illustrée par la figure 5. Le dispositif représenté sur cette figure est très proche de celui représenté sur la figure 4. La fibre 1 est enroulée sur un mandrin cylindrique 7 réalisé dans un matériau non compressible, par exemple de la silice. Un champ magnétique rotationel $\vec{H}$ est créé au moyen d'un conducteur 14 parcouru par un courant i provenant d'une source de courant 15. Le champ magnétique H se trouve en tout point de la fibre parallèle à la direction de propagation de la lumière et induit donc des variations d'indice de réfraction par effet Faraday. Ces variations sont de même signe pour les deux sens de propagation.

Les applications de l'invention sont celles des interféromètres à cavité de Fabry-Pérot classique, notamment la spectrométrie. L'interféromètre peut aussi être utilisé comme monochromateur, en association avec source lumineuse de spectre étendu. Pour améliorer ses propriétés de filtrage, on peut associer deux interféromètres en série. Un moyen simple de réaliser cette association consiste à utiliser une seule fibre enroulée, munie de moyens réflecteurs à ses deux extrémités et en une troisième zone intermédiaire, sous la forme, par exemple, d'un amincissement de la fibre. En choisissant convenablement les longueurs des deux tronçons de fibre ainsi constitués, on peut faire en sorte qu'ils aient des intervalles spectraux différents. Des pics d'interférence sont obtenus uniquement à la coïncidence d'un pic de chaque tronçon. On augmente ainsi l'intervalle spectral résultant, tout en conservant une sélectivité de même ordre que celle de chacun des tronçons pris séparément.

La très grande sensibilité de l'interféromètre selon l'invention, même pour des excitations faibles conduit par ailleurs à envisager son application à la mesure d'un paramètre physique capable de modifier le chemin optique. Ainsi, on peut utiliser un tel interféromètre pour mesurer les pressions s'exerçant sur le mandrin autour duquel est enroulée la fibre, par exemple la pression d'un fluide circulant à l'intérieur du mandrin. Cette mesure nécessite un étalonnage approprié. D'autre part, il ne faut pas que d'autres causes de variations du chemin optique se superposent à l'effet à mesurer. Le dispositif est notamment sensible aux variations de température. Pour éviter cet inconvénient, on peut le placer dans une enceinte thermostatée, ou bien lui associer un capteur de température que l'on insère dans une boucle de façon à superposer à la contrainte due à la pression à mesurer une contrainte compensant les variations de température, obtenu par exemple par une tension électrique, le mandrin étant piézoélectrique.

**Revendications**

1. Interféromètre à cavité optique accordable, comprenant une fibre optique monomode (1) ayant deux élément réflecteurs (4, 5) disposés aux extrémités de ladite fibre, l'ensemble de la fibre (1) et des éléments réflecteurs (4, 5) constituant cette cavité, et des moyens (8; 14, 15) permettant de faire varier le chemin optique entre ces deux éléments, caractérisé en ce que la fibre optique (1) est enroulée pour former une bobine sur un mandrin cylindrique (7) et que ces moyens (8; 14, 15) permettent d'agir sur cette bobine de fibre pour changer de chemin optique de la cavité optique.

2. Interféromètre suivant la revendication 1, caractérisé par le fait que le mandrin cylindrique (7) est réalisé en matériau compressible, dans lequel sont créées par l'intermédiaire desdits moyens (8), des forces de contraintes.

3. Interféromètre suivant la revendication 2, caractérisé par le fait que la mandrin (7) est constitué par une céramique piézoélectrique munie d'électrodes reliées à une source de tension (8).

4. Interféromètre suivant la revendication 2, caractérisé par le fait que le mandrin (7) est soumis à des forces de pression.

5. Interféromètre suivant la revendication 1, caractérisé par le fait que le mandrin (7) cylindrique est incompressible et lesdits moyens comportent un conducteur relié à une source de courant et s'étendant à l'intérieur du mandrin le long de l'axe de mandrin.

6. Interféromètre suivant la revendication 1, caractérisé par le fait que les deux extrémités de la fibre sont polies et recouvertes d'un dépôt réflecteur de façon à constituer les deux éléments réflecteurs (4, 5).

7. Interféromètre suivant la revendication 6, caractérisé par le fait que chaque dépôt réflecteur est formé d'au moins une couche diélectrique.

8. Interféromètre suivant la revendication 6, caractérisé par le fait que chaque dépôt réflecteur est formé d'une couche métallique recouvrant au moins une partie de la surface de l'extrémité de la fibre.

9. Interféromètre suivant la revendication 1, caractérisé par le fait que les éléments réflecteurs (4, 5) sont formés par des réseaux de pas prédéterminés formés respectivement au voisinage des deux extrémités de la fibre.

10. Interféromètre suivant la revendication 1, caractérisé par le fait que les éléments réflecteurs (4, 5) sont formés par des discontinuités créées respectivement au voisinage des deux extrémités de la fibre.

11. Interféromètre suivant la revendication 1, caractérisé par le fait que des rayonnements étant issus d'un laser semiconducteur (2) et recueillis par un photodétecteur (3), la jonction émissive du laser et la face d'entrée du photodétecteur sont respectivement accolés aux deux extrémités de la fibre, formant une discontinuité du milieu de propagation provoquant une réflexion partielle des rayonnements.

12. Dispositif optique monochromateur, caractérisé par le fait qu'il comprend un interféromètre selon l'une quelconque des revendications 1 à 11.

13. Dispositif optique de spectrographie, caractérisé par le fait qu'il comprend un interféromètre selon l'une quelconque des revendications 1 à 11.

14. Dispositif de mesure de pression, caractérisé par le fait qu'il comprend un interféromètre selon l'une quelconque des revendications 1 à 4.

**Claims**

1. Interferometer having a tunable optical cavity, comprising a monomode optical fibre (1) having two reflector elements (4, 5) disposed at the ends of the said fibre, the assembly of the fibre (1) and the reflector elements (4, 5) constituting this cavity, and means allowing to cause to vary the optical path between these two elements, characterized in that the optical fibre (1) is wound in order to form a coil on a cylindrical mandrel (7) and that these means (8, 14, 15) allow to act on this fibre coil in order to change the optical cavity.

2. Interferometer according to claim 1, characterized by the fact that the cylindrical mandrel is formed of compressible material, in which tensile stresses are created through the intermediary of the said means.

3. Interferometer according to claim 2, characterized by the fact that the mandrel (7) is constituted by a piezoelectric ceramic provided with electrodes connected to a voltage supply source (8).

4. Interferometer according to claim 2, characterized by the fact that the mandrel (7) is subject to pressure forces.

5. Interferometer according to claim 1, characterized by the fact that the cylindrical mandrel (7) is incompressible and that the said means comprise a conductor connected to a voltage source and extending inside the mandrel along the axis of the mandrel.

6. Interferometer according to claim 1, characterized by the fact that the two ends of the fibre are polished and coated with a reflector deposit in order to constitute the two reflector elements.

7. Interferometer according to claim 6, characterized by the fact that each reflector deposit is formed of at least one dielectric layer.

8. Interferometer according to claim 6, characterized by the fact that each reflector deposit is formed of a metallic layer covering at least one part of the surface of the end of the fibre.

9. Interferometer according to claim 1, characterized by the fact that the reflector elements (4, 5) are formed by predetermined pitch networks formed respectively adjacent to the two ends of the fibre.

10. Interferometer according to claim 1, characterized by the fact that the reflector elements are formed by discontinuities created respectively adjacent to the two ends of the fibre.

11. Interferometer according to claim 1, characterized by the fact that the radiations being issued from a semiconductor layer (2) and gathered by a photodetector (3), the emissive junction of the laser and the input face of the photodetector abutting respectively on the two ends of the fibre, forming a discontinuity of the propagation medium provoking a partial reflection of the radiations.

12. Monochromator optical device, characterized by the fact that it comprises an interferometer according to any one of claims 1 to 11.

13. Optical device for spectrography, characterized by the fact that it comprises an interferometer according to any one of claims 1 to 11.

14. Pressure measurement device, characterized by the fact that it comprises an interferometer according to any one of claims 1 to 4.

**Patentansprüche**

1. Interferometer mit abstimmbarem optischen Hohlraum, welches eine monomodale optische Fiber (1) mit zwei an den Enden besagter Fiber angeordneten reflektierenden Elementen (4, 5), wobei die Gesamtheit der Fiber (1) und der reflektierenden Elemente (4, 5) diesen Hohlraum bildet und Mittel (8, 14, 15) um den optischen Weg zwischen diesen beiden Elementen zu variieren aufweist, dadurch gekennzeichnet, dass die optische Fiber (1) um einen zylindrischen Spulenkörper (7) gewickelt ist, um eine Spule herzustellen und dass diese Mittel (8, 14, 15) es ermöglichen, auf diese Fiber-Spule einzuwirken, um den optischen Weg des optischen Hohlraums zu verändern.

2. Interferometer nach Anspruch 1, dadurch gekennzeichnet, dass der zylindrische Spulenkörper (1) aus kompressiblen Material besteht, in welchem mit Hilfe benannter Mittel (8) Spannungskräfte erzeugt werden.

3. Interferometer nach Anspruch 2, dadurch gekennzeichnet, dass der Spulenkörper (7) aus einer piezoelektrischen Keramik besteht, die mit einer Spannungsquelle (8) verbundenen Elektroden versehen ist.

4. Interferometer nach Anspruch 2, dadurch gekennzeichnet, dass der Spulenkörper (7) Druckkräften ausgesetzt ist.

5. Interferometer nach Anspruch 1, dadurch gekennzeichnet, dass der zylindrische Spulenkörper (7) inkompressibel ist und benannte Mittel einen mit einer Stromquelle verbundenen Leiter aufweist, der sich innerhalb des Spulenkörpers längst der Achse des Spulenkörpers ausdehnt.

6. Interferometer nach Anspruch 1, dadurch gekennzeichnet, dass die beiden Enden der Fiber poliert sind und mit einer reflektierender Beschichtung bedeckt sind, um die beiden reflektierende Elemente (4, 5) zu bilden.

7. Interferometer nach Anspruch 6, dadurch gekennzeichnet, dass jede reflektierende Beschichtung aus mindestens einer dielektrischen Schicht besteht.

8. Interferometer nach Anspruch 6, dadurch gekennzeichnet, dass jede reflektierende Beschichtung aus einer Metall-Schicht besteht, welche mindestens einen Teil der Endfläche der Fiber bedeckt.

9. Interferometer nach Anspruch 1, dadurch gekennzeichnet, dass die beiden reflektierenden Elemente (4, 5) aus Gittern mit vorbestimmtem Schritt bestehen, welche beiderseits in der Nähe der beiden Enden der Fiber gebildet sind.

10. Interferometer nach Anspruch 1, dadurch gekennzeichnet, dass die reflektierende Elemente (4, 5) aus Diskontinuitäten bestehen, welche beiderseits in der Nähe der beiden Enden der Fiber geschaffen werden.

11. Interferometer nach Anspruch 1, dadurch gekennzeichnet, dass Strahlungen von einem halbleitenden Laser (2) stammen und durch einen Photodetektor (3) empfangen werden, dass die leuchtende Sperrschicht des Lasers und die Eingangsseite des Photodetektors beiderseits gegen die beiden Enden der Fiber aufliegen, wodurch eine Diskontinuität des Fortpflanzungs-Mediums gebildet wird, welche eine teilweise Reflexion der Strahlungen verursacht.

12. Optische Monochromator-Vorrichtung, dadurch gekennzeichnet, dass sie ein Interferometer nach irgendeinem der Ansprüche 1 bis 11 beinhaltet.

13. Optische Spektoskopie-Vorrichtung, dadurch gekennzeichnet, dass sie ein Interferometer nach irgendeinem der Ansprüche 1 bis 11 beinhaltet.

14. Druckmess-Vorrichtung, dadurch gekennzeichnet, dass sie ein Interferometer nach irgendeinem der Ansprüche 1 bis 4 beinhaltet.

# FIG.1

# FIG.4

# FIG.2

# FIG.3

2

# FIG.5